(19) Europäisches Patentamt
European Patent Office
Office européen des brevets

(11) EP 4 254 314 A1

(12) EUROPEAN PATENT APPLICATION
published in accordance with Art. 153(4) EPC

(43) Date of publication:
04.10.2023 Bulletin 2023/40

(51) International Patent Classification (IPC):
*G06T 3/00* (2006.01)

(21) Application number: 21896776.8

(22) Date of filing: 09.11.2021

(86) International application number:
PCT/CN2021/129536

(87) International publication number:
WO 2022/111275 (02.06.2022 Gazette 2022/22)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 27.11.2020 CN 202011365066

(71) Applicant: Hangzhou Hikvision Digital
Technology Co., Ltd.
Hangzhou, Zhejiang 310051 (CN)

(72) Inventors:
• XIONG, Hui
  Hangzhou, Zhejiang 310051 (CN)
• SHEN, Yang
  Hangzhou, Zhejiang 310051 (CN)
• YU, Shaowen
  Hangzhou, Zhejiang 310051 (CN)

(74) Representative: Vogelbruch, Keang
VOGELBRUCH Patentanwaltsgesellschaft mbH
Paul-Gerhardt-Straße 16
40593 Düsseldorf (DE)

(54) DATA PROCESSING METHOD AND APPARATUS, AND ELECTRONIC DEVICE

(57) The present disclosure provides a data processing method and apparatus, and an electronic device. The method includes: determining at least one target overlapping region, where any one of the at least one target overlapping region is an overlapping region between a custom region and one of at least one target monitoring region, and one of the at least one target monitoring region is a monitoring region that overlaps with the custom region; and according to heat map data for the at least one target monitoring region and the at least one target overlapping region, determining heat map data for the custom region. The method can provide data support for the heat map data analysis for the custom region.

Determine at least one target overlapping region — S200

According to heat map data for the at least one target monitoring region and the at least one target overlapping region, determine heat map data for the custom region — S210

FIG. 2

EP 4 254 314 A1

## Description

## CROSS REFERENCE TO RELATED APPLICATIONS

The present application claims priority of the Chinese patent application with application number 202011365066.2 and title "DATA PROCESSING METHOD AND APPARATUS, AND ELECTRONIC DEVICE", filed on November 27, 2020, which is incorporated by reference into the present application.

## TECHNICAL FIELD

The present disclosure relates to the technical field of monitoring technology, in particular to a data processing method and apparatus, and an electronic device.

## BACKGROUND

For a heat map, values of elements in a heat map matrix of a single monitoring camera (for example, a fisheye camera, and a fisheye camera is used as an example below) are converted into pixel values through a heat map synthesis library, the pixel values are attached to a plane base map, such that the plane base map covered with multiple colors is shown, where a color depth represents a value of heat map data.

The heat map data refers to personnel stay time matrix data (for example, data of a matrix of 260 * 260) or personnel quantity matrix data (for example, data of a matrix of 260*260) recorded by the fisheye camera. A value of each element of the personnel stay time matrix data indicates a sum of stay time (in seconds) of respective personnel at a physical plane point within a statistical time unit (such as one hour). A value of each element of the personnel quantity matrix data indicates the number of personnel counted on a physical plane point within a statistical time unit (such as one hour).

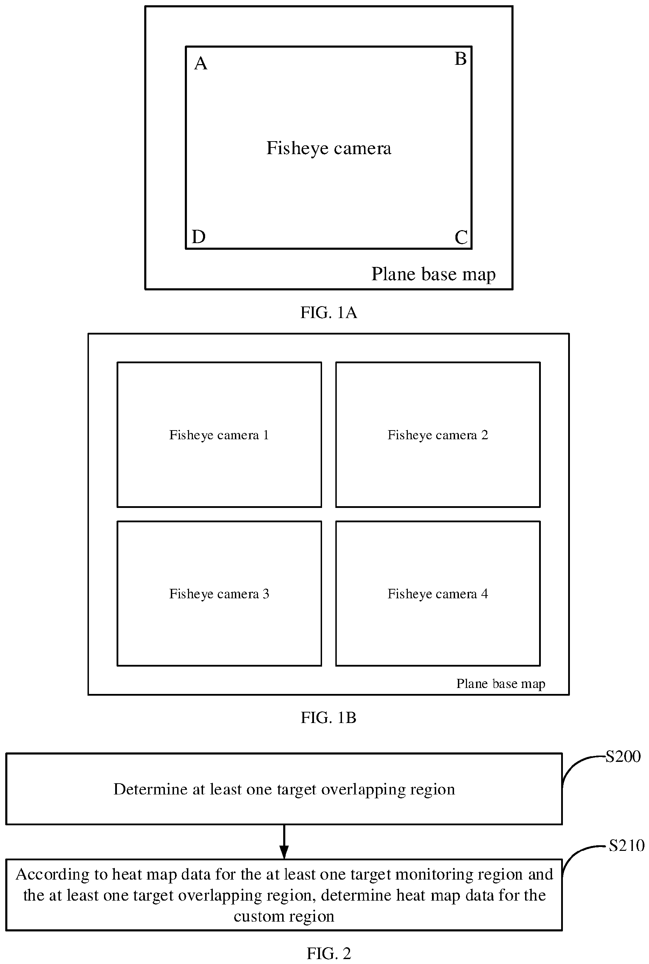

In traditional solutions for deploying fisheye camera to collect heat map data, most of the solutions analyze heat map matrix data collected by a single fisheye camera. For example, for an application of heat map data in a convenience store scene, taking a deployment manner with a single fisheye camera shown in FIG. 1A as an example (a fisheye camera region in FIG. 1A is rectified into a regular rectangular region, the same below), when analyzing the heat map data, only heat map matrix data of the fisheye camera region (the rectangular ABCD region in FIG. 1A) needs to be analyzed.

However, with expansion of application scenarios, a heat map data analysis scheme for global deployment of multiple fisheye cameras has gradually become a popular research direction. For example, for a deployment manner with multiple fisheye cameras shown in FIG. 1B, when this deployment manner is applied to a dense shop environment, it may appear that a heat map data collected by a single fisheye camera includes data of multiple shops, and a single shop may also be covered by monitoring regions of multiple fisheye cameras. In this case, how to perform heat map data analyze for a single store has become a difficult problem.

## SUMMARY

In view of this, in the present disclosure, a data processing method and device, and an electronic device are provided to realize determining heat map data for a custom region.

According a first aspect of embodiments of the present disclosure, a data processing method is provided, including: determining at least one target overlapping region, where any one of the at least one target overlapping region is an overlapping region between a custom region and one of at least one target monitoring region, and one of the at least one target monitoring region is a monitoring region that overlaps with the custom region; and according to heat map data for the at least one target monitoring region and the at least one target overlapping region, determining heat map data for the custom region.

According a second aspect of embodiments of the present disclosure, a data processing apparatus is provided, including: a determining unit, configured to determine at least one target overlapping region, where any one of the at least one target overlapping region is an overlapping region between a custom region and one of at least one target monitoring region, and one of the at least one target monitoring region is a monitoring region that overlaps with the custom region; and a second determining unit, configured to, according to heat map data for the at least one target monitoring region and the at least one target overlapping region, determine heat map data for the custom region.

According to a third aspect of embodiments of the present disclosure, an electronic device is provided, including a processor and a machine-readable storage medium, where the machine-readable storage medium stores machine-executable instructions that can be executed by the processor, and the processor is configured to execute machine-executable instructions to implement the data processing method of the first aspect.

According to a fourth aspect of embodiments of the present disclosure, a computer-readable storage medium is provided, where the computer-readable storage medium stores a computer program, and the computer program when executed by a processor achieves the data processing method of the first aspect.

According to a fifth aspect of embodiments of the present disclosure, a computer program is provided, including machine executable instructions, where when a processor executes the machine executable instructions, the processor implements the data processing method of the first aspect.

In the data processing method according to the embodiments of the present disclosure, at least one target overlapping region is determined, and the heat map data of the custom region is determined based on the heat map for the at least one target monitoring region and the at least one target overlapping region, which realizes the determination of the heat map data for a single custom region in a scenario of deploying multiple monitoring cameras, and provides data support for heat map data analysis of the custom region.

## BRIEF DESCRIPTION OF DRAWINGS

FIG. 1A is a schematic diagram of a typical deployment manner with a single fisheye camera.
FIG. 1B is a schematic diagram of a typical deployment manner with multiple fisheye cameras.
FIG. 2 is a schematic flowchart of a data processing method according to some embodiments of the present disclosure.
FIG. 3 is a schematic diagram of an application scenario according to some embodiments of the present disclosure.
FIG. 4 is a schematic flowchart for determining a target monitoring region that overlaps with a custom region according to some embodiments of the present disclosure.
FIG. 5 is a schematic flowchart for determining second coordinate information of a target overlapping region in an image coordinate system of a target monitoring camera according to some embodiments of the present disclosure.
FIG. 6A is a schematic diagram of a plane base map in an application scenario according to some embodiments of the present disclosure.
FIG. 6B is a schematic diagram of rotating a monitoring region according to some embodiments of the present disclosure.
FIG. 7 is a structural schematic diagram of a data processing apparatus according to some embodiments of the present disclosure.
FIG. 8 is a schematic diagram of a hardware structure of an electronic device according to some embodiments of the present disclosure.

## DETAILED DESCRIPTION

Exemplary embodiments will be described in detail herein, examples of which are illustrated in the accompanying drawings. The following description refers to the drawings, the same numerals in different drawings refer to the same or similar elements unless otherwise indicated. Embodiments described in the illustrative examples below are not intended to represent all embodiments consistent with the present disclosure. Rather, they are merely embodiments of devices and methods consistent with some aspects of the present disclosure as recited in the appended claims.
Terms used in the present disclosure are only for the purpose of describing particular embodiments and are not intended to limit the present disclosure. As used in the present disclosure and the appended claims, the singular forms "a", "said" and "the" are intended to include the plural forms as well, unless the context clearly indicates otherwise.
In order to enable those skilled in the art to better understand the technical solution provided in embodiments of the present disclosure, some technical terms involved in the embodiments of the present disclosure are explained below.
Plane base map: In a heat map of a single monitoring camera, a plane base map is usually an image captured by the camera. In a global heat map, a plane base map needs to be configured separately in a platform system, such as HCP (HikCentral Professional) system.
Global heat map: for a global heat map, values of elements in a heat map matrix of multiple monitoring cameras are converted into pixel values through a heat map synthesis library, the pixel values are attached to a plane base map according to coordinate positions of a rectangular region deployed by each monitoring camera on the plane base map, and the plane base map covered with multiple colors is shown, where a color depth represents a value of heat map data.
Custom region: refers to a region drawn on a plane base map of a global heat map. For example, if a fisheye camera is deployed in a large shopping mall to count heat map data, a region covered by a camera contains multiple stores, but each store focuses on heat map data of its own store region, thus a region corresponding to this store can be drawn in a plane base map of the shipping mall, where the drawn region is a custom region.
As an example, a custom region may include but not be limited to a rectangular region, a circular region, or a parallelogram region.
In order to make the above objectives, features, and advantages of the embodiments of the present disclosure more understandable, the technical solutions in the embodiments of the present application are further described in detail below in conjunction with the accompanying drawings.
FIG. 2 is a schematic flowchart of a data processing method according to some embodiments of the present disclosure. As shown in FIG. 2, the data processing method may include following steps S200 to S210.
It should be noted that serial numbers of steps in the embodiments of the present disclosure do not mean order of execution, and the execution order of each process should be determined by its function and internal logic, thus the serial numbers of steps should not constitute any limitation for the implementation process of the embodiments of the present application.
In step S200, at least one target overlapping region is determined, where any one of the at least one target overlapping region is an overlapping region between a custom region and one of at least one target monitoring region, and one of the at least one target monitoring region is a monitoring region that overlaps with the custom region.

As an example, in order to facilitate understanding and explanation, in the present disclosure, the custom region being a rectangular region is taken as an example for illustration, and processing of the custom region being other regular graphic regions can be derived in the same way.

In some embodiments of the present disclosure, in order to determine heat map data of a single custom region in a scenario of deploying multiple monitoring cameras, based on a distribution of a monitoring region and the custom region, a monitoring region that overlaps with the custom region (referred to as a target monitoring region in the present disclosure) can be determined, and an overlapping region between the custom region and the monitoring region (referred to as a target overlapping region in the present disclosure) can be determined.

In step S210, according to heat map data for the at least one target monitoring region and the at least one target overlapping region, heat map data for the custom region is determined.

In some embodiments of the present disclosure, after at least one target overlapping region is determined, according to the heat map data for the at least one target monitoring region and at least one target overlapping region, heat map data for the at least one target overlapping region can be determined, and according to the heat map data for the at least one target overlapping region, the heat map data for the custom region can be determined.

For example, the heat map data for the target monitoring region may include but not be limited to width and height information of the heat map for the target monitoring region, and/or heat map data values in the heat map for the target monitoring region.

As an example, according to a distribution of the target overlapping region in the corresponding target monitoring region, and heat map data for the target monitoring region, heat map data for the target overlapping region can be determined, and then heat map data for the custom region can be determined.

It can be seen that in the method flow shown in FIG. 2, by determining at least one target monitoring region that overlaps with the custom region, and at least one target overlapping region between the custom region and the at least one target monitoring region, the heat map data of the custom region is determined based on the heat map for the at least one target monitoring region and the at least one target overlapping region, which realizes the determination of the heat map data for a single custom region in a scenario of deploying multiple monitoring cameras, and provides data support for heat map data analysis of the custom region.

As a possible embodiment, in step S200, determining at least one target overlapping region can include:

according to first coordinate information of a monitoring region of each monitoring camera in a plane base map coordinate system, and first coordinate information of the custom region, at least one monitoring region that overlaps with the custom region is respectively determined as at least one target monitoring region; and according to the first coordinate information of the custom region and first coordinate information of the at least one target monitoring region, first coordinate information of the at least one target overlapping region in the plane base map coordinate system, where the first coordinate information of the at least one target overlapping region is configured to represent the at least one target overlapping region.

As an example, the plane base map coordinate system refers to a planar coordinate system established in a plane where the plane base map is located, with the horizontal direction being the x-axis and the vertical direction being the y-axis, where the origin of the coordinate system can include any vertex or center point of the plane base map.

For the convenience of description and understanding, the origin of the plane base map coordinate system is taken as the upper left vertex of the plane base map, the positive direction of the x-axis is horizontally to the right, and the positive direction of the y-axis is vertically downward as an example below.

For example, coordinate information (referred to as the first coordinate information in the present disclosure) of the monitoring region of the monitoring camera in the plane base map coordinate system and coordinate information (referred to as the first coordinate information in the present disclosure) of the custom region in the plane base map coordinate system can be configured in advance.

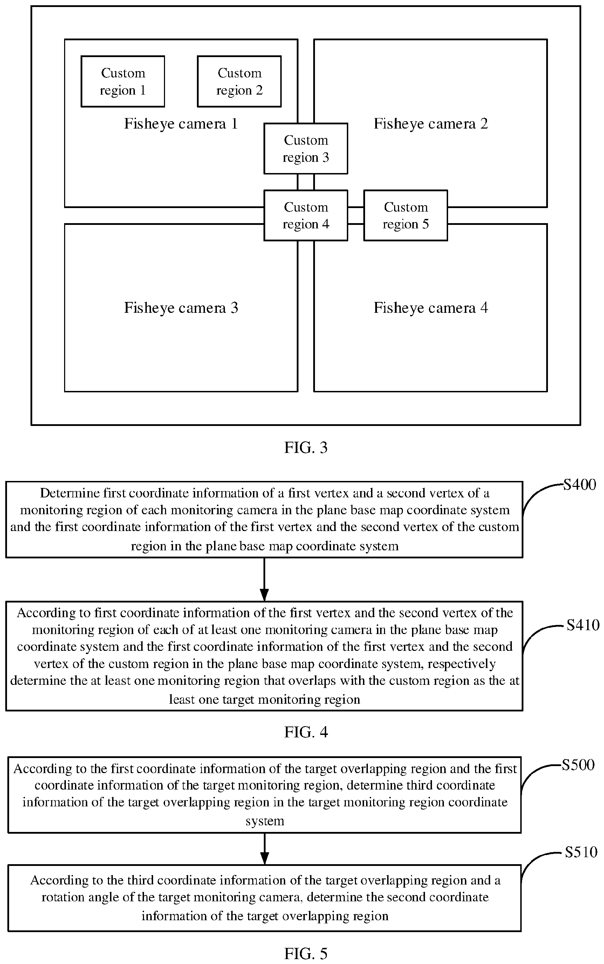

For example, taking a scenario shown in FIG. 3 as an example, first coordinate information of monitoring regions of monitoring cameras 1-4 in the plane base map coordinate system and first coordinate information of custom regions 1-5 in the plane base map coordinate system can be configured separately.

For example, the first coordinate information of the monitoring region and/or the first coordinate information of the custom region can include at least one of coordinates of two diagonal vertexes in the plane base map coordinate system, coordinates of any vertex in the plane base map coordinate system and width and height, coordinates of a center point in the plane base map coordinate system and width and height, or coordinates of any vertex in the plane base map coordinate system and coordinates of a center point in the plane base map coordinate system.

For example, according to the first coordinate information of the monitoring region of the monitoring camera and the first coordinate information of the custom region, the monitoring region overlapping with the custom region (referred to as the target monitoring region in the present disclosure) can be determined.

It should be noted that when multiple custom regions exist, for any custom region, such as any custom region of the custom regions 1-5 in the scenario shown in FIG. 3, the heat map data can be determined according to the method described in steps S200 to S210.

After that the at least one target monitoring region that overlaps with the custom region is determined in the manner described in step S200, according to the first coordinate information of the custom region and the first coordinate information of the at least one target monitoring region, first coordinate information of the at least one target overlapping region in the plane base map coordinate system can be determined.

As a possible embodiment, in step S210, according to heat map data for the at least one target monitoring region and the at least one target overlapping region, determining heat map data for the custom region may include: for each of the at least one target monitoring region and a target overlapping region between the target monitoring region and the custom region, according to first coordinate information of the target overlapping region and first coordinate information of the target monitoring region, determining second coordinate information of the target overlapping region in an image coordinate system of a target monitoring camera, where the target monitoring camera corresponds to the target monitoring region; and the heat map data for the at least one target monitoring region and the second coordinate information of the at least one target overlapping region, determining heat map data for the custom region.

As an example, considering that the heat map of a monitoring camera is based on the image coordinate system of the monitoring camera, in order to determine the heat map data for the custom region, it is necessary to determine the coordinates of the target overlapping region in the image coordinate system of the monitoring camera.

For example, the image coordinate system of the monitoring camera may be a plane coordinate system with the upper left vertex of the image of the monitoring camera as an origin, the positive direction of the x-axis horizontally to the right, and the positive direction of the y-axis vertically downward.

After the first coordinate information of the target overlapping region is determined, according to the first coordinate information of the target overlapping region and the first coordinate information of the target monitoring region, the coordinate information (referred to as the second coordinate information in the present disclosure) of the target overlapping region in the image coordinate system of the monitoring camera (referred to as the target monitoring camera in the present disclosure) corresponding to the target monitoring region can be determined.

After the second coordinate information of the target overlapping region is determined, according to the heat map data corresponding to the target monitoring region and the second coordinate information of the target overlapping region, a region corresponding to the second coordinate information of the target overlapping region in the heat map corresponding to the target monitoring region can be determined as the heat map data of the target overlapping region, and then, according to the heat map data of the at least one target overlapping region, the heat map data of the custom region is determined.

It should be noted that after the heat map data of the custom region is determined, relevant analysis can be conducted based on the heat map data of the custom region, such as maximum heat value analysis and average heat value analysis, which is not limited in the present disclosure.

As a possible embodiment, as shown in FIG. 4, according to the first coordinate information of the monitoring region of each monitoring camera in the plane base map coordinate system and the first coordinate information of the custom region, each of the at least one monitoring that overlaps with the custom region can be determined as one of the at least one target monitoring region, through the following steps S400 to S410.

In step S400, first coordinate information of a first vertex and a second vertex of a monitoring region of each monitoring camera in the plane base map coordinate system and the first coordinate information of the first vertex and the second vertex of the custom region in the plane base map coordinate system are separately determined.

In step S410, according to first coordinate information of the first vertex and the second vertex of the monitoring region of each of at least one monitoring camera in the plane base map coordinate system and the first coordinate information of the first vertex and the second vertex of the custom region in the plane base map coordinate system, the at least one monitoring region that overlaps with the custom region is respectively determined as the at least one target monitoring region.

As an example, according to a distribution state of the vertex (referred to as the first vertex in the present disclosure) of the monitoring region closest to the origin and the vertex (referred to as the second vertex in the present disclosure) of the monitoring region farthest from the origin in the plane base map coordinate system, and the vertex (referred to as the first vertex in the present disclosure) of the custom region closest to the origin and the vertex (referred to as the second vertex in the present disclosure) of the custom region farthest from the origin in the plane base map coordinate system, it is determined whether there is an overlap between the monitoring region and the custom region.

As an example, in the case where the origin of the plane base map coordinate system is the top left vertex of the plane base, the first vertex mentioned above is the top left vertex, and the second vertex is the bottom right vertex.

Correspondingly, according to the first coordinate information of the first and second vertexes of the monitoring region, and the first coordinate information of the first and second vertexes of the custom region, the target monitoring region that overlaps with the custom region can be determined.

In an embodiment, in step S410, according to first coordinate information of the first vertex and the second vertex of the monitoring region of each of at least one monitoring camera in the plane base map coordinate system and the first coordinate information of the first vertex and the second vertex of the custom region in the plane base map coordinate system, determining the at least one monitoring region each of which overlaps with the custom region as the at least one target monitoring region may include: for any monitoring region, in response to determining that an abscissa of a target second vertex is greater than or equal to an abscissa of a target first vertex, and an ordinate of the target second vertex is greater than or equal to an ordinate of the target first vertex, determine that the monitoring region is a target monitoring region that overlaps with the custom region.

For example, for any monitoring region, a first vertex (referred to as the target first vertex in the present disclosure) of the first vertex of the monitoring region and the first vertex of the custom region that is farthest from the origin of the plane base map coordinate system, and a second vertex (referred to as the target second vertex in the present disclosure) of the second vertex of the monitoring region and the second vertex of the custom region that is closest to the origin of the plane base map coordinate system can be determined, and then, the first coordinate information of the target first vertex is compared with the first coordinate information of the target second vertex.

In response to determining that an abscissa of a target second vertex is greater than or equal to an abscissa of a target first vertex, and an ordinate of the target second vertex is greater than or equal to an ordinate of the target first vertex, it is determined that the monitoring region overlaps with the custom region.

It should be noted that in the embodiments of the present disclosure, a case indicating that the monitoring region overlaps with the custom region includes a case that a boundary of the monitoring region and a boundary of the custom region are intersected.

It should be recognized that the implementation method described in the above embodiments to determine whether there is an overlapping region between the monitoring region and the custom region is only an example in the embodiments of the present disclosure, and does not limit the scope of protection of the present disclosure. That is, in the embodiments of the present disclosure, other methods can also be used to determine whether there is an overlapping region between the monitoring region and the custom region. For example, for any monitoring region, intersection points of lines where boundaries of the monitoring region are located and lines where boundaries of the custom region are located can be determined, and it can be determined whether there is any intersection point that is both on the boundaries of the monitoring region and on the boundaries of the custom region; if there is an intersection point that is both on the boundaries of the monitoring region and on the boundaries of the custom region, it is determined that the monitoring region overlaps with the custom region; if there is no intersection points that is both on the boundaries of the monitoring region and on the boundaries of the custom region, it is further determined whether all four vertexes of the monitoring region are within the custom region, or whether all four vertexes of the custom region are within the monitoring region; if all four vertexes of the monitoring region are within the custom region, or all four vertexes of the custom region are within the monitoring region, it is determined that there is an overlapping region between the monitoring region and the custom region, otherwise, i.e., all the aforementioned judgments are negative, it is determined that there is no overlapping region between the monitoring region and the custom region.

In some embodiments, according to the first coordinate information of the custom region and the first coordinate information of the at least one target monitoring region, determining first coordinate information of the at least one target overlapping region in the plane base map coordinate system may include: for each target overlapping region, the coordinates of the target second vertex and the target first vertex in the plane base map coordinate system are determined as the first coordinate information of the target overlapping region in the plane base map coordinate system, where the first coordinate information of the target overlapping region is used to represent the target overlapping region. The target second vertex and the target first vertex herein are the two diagonally opposite vertexes of the target overlapping region. The coordinates of these two vertexes in the plane base map coordinate system can represent the target overlapping region.

As a possible embodiment, as shown in FIG. 5, for each of the at least one target monitoring region and the target overlapping region between the target monitoring region and the custom region, according to the first coordinate information of the target overlapping region and the first coordinate information of the target monitoring region, the second coordinate information of the target overlapping region in the image coordinate system of the target monitoring camera can be determined, through the following steps S500 to S510.

In step S500, according to the first coordinate information of the target overlapping region and the first coordinate information of the target monitoring region, third coordinate information of the target overlapping region in the target monitoring region coordinate system is determined.

As an example, since a heat map for a monitoring region of a monitoring camera corresponds to an image coordinate system of the monitoring camera, that is, the origin (upper left vertex) of the image coordinate system of the monitoring camera corresponds to the element [0,0] in the heat map matrix, and the lower right vertex of the image of the monitoring camera corresponds to the last element in the heat map matrix. Taking the 260 * 260 matrix as an example, the last element is the element [259, 259]. Therefore, in order to determine the heat map data for the target overlapping region, it is necessary to determine the coordinate information of the target overlapping region in the image coordinate system of the monitoring camera.

Correspondingly, after the first coordinate information of the target overlapping region is determined, according to the first coordinate information of the target overlapping region and the first coordinate information of the target monitoring region, the coordinate information (referred to as a third coordinate information in the present disclosure) of the target overlapping region in the target monitoring region coordinate system can be determined.

For example, the target monitoring region coordinate system is a coordinate system with a target vertex of the target monitoring region as an origin and a horizontal axis and a vertical axis respectively parallel to and in the same direction as a horizontal axis and a vertical axis of the plane base map coordinate system, and the target vertex is a vertex in the target monitoring region that is closest to the origin of the plane base map coordinate system.

In a case where the origin of the plane base map coordinate system is the top left vertex, the origin of the target monitoring region coordinate system is the top left vertex of the target monitoring region, horizontally to the right is the positive direction of the x-axis, and vertically downward is the positive direction of the y-axis.

Since the horizontal and vertical axes of the plane base map coordinate system (corresponding to the first coordinate information) and the target monitoring region coordinate system (corresponding to the third coordinate information) are in the same direction, the first coordinate system can be translated to obtain the corresponding third coordinate information.

For example, in the above example, horizontally to the right is the positive direction of the x-axis, and vertically downward is the positive direction of the y-axis. Assuming that the origin of the target monitoring region coordinate system is horizontally translated to the right by △x relative to the origin of the plane base map coordinate system, and vertically translated downward by △y relative to the origin of the plane base map coordinate system, for the same position, the abscissa value in the third coordinate information can be obtained by subtracting △x from the abscissa value in the first coordinate information, and the ordinate value in the third coordinate information can be obtained by subtracting △y from the ordinate value in the first coordinate information.

In step S510, according to the third coordinate information of the target overlapping region and a rotation angle of the target monitoring camera, the second coordinate information of the target overlapping region is determined.

As an example, considering that there may be a rotation angle in actual deployment of a monitoring camera, the x and y axes of the image coordinate system of the monitoring camera may not be completely in the same direction as the x and y axes of the plane base map coordinate system (i.e., the positive direction of the x axis of the image coordinate system of the monitoring camera is different from the positive direction of the x axis of the plane base map coordinate system, or/and, the positive direction of the y axis of the image coordinate system of the monitoring camera is different from the positive direction of the y axis of the plane base map coordinate system).

For example, taking the clockwise rotation angle as an example (e.g., counterclockwise rotation of A° is clockwise rotation of 360°-A°), and the rotation angle is an integer multiple of 90°.

After the third coordinate information of the target overlapping region is determined, based on the third coordinate information of the target overlapping region and the rotation angle of the target monitoring camera, the second coordinate information of the target overlapping region in the image coordinate system of the monitoring camera can be determined.

For example, according to the rotation angle of the target monitoring camera, the third coordinate information of the target overlapping region can be mapped to the second coordinate information through an axis rotation formula.

As a possible embodiment, according to heat map data for the at least one target monitoring region and the at least one target overlapping region, determining the heat map data for the custom region include: according to a width ratio of each of the at least one target monitoring region to a heat map and a height ratio of each of the at least one target monitoring region to the heat map, and at least one target overlapping region, heat map data for the at least one target overlapping region can be determined, and according to the heat map data for the at least one target overlapping region, the heat map data for the custom region can be determined.

For example, after the target overlapping region between the custom region and the target monitoring region is determined, according to a width ratio of the target monitoring region to a heat map and a height ratio of the target monitoring region to the heat map, and the target overlapping region, heat map data for the target overlapping region can be determined.

For example, after the second coordinate information of the target overlapping region is determined, according to a width ratio of the target monitoring region to the heat map and a height ratio of the target monitoring region to the heat map, and the second coordinate information of the target overlapping region, the heat map data corresponding to the target overlapping region can be determined. For example, the number of pixels corresponding to a coordinate unit within the target monitoring region can be determined.

For example, assuming that the heat map is a 260 * 260 image, and the width and height of the target monitoring region are respectively w and h, the ratio of the length of the target monitoring region to the width of the heat map is w: 260, that is, a horizontal coordinate unit corresponds to 260/w pixels, and the ratio of the width of the target monitoring region to the height of the heat map is h: 260, that is, a vertical coordinate unit corresponds to 260/h pixels.

According to the second coordinate information of the target overlapping region and the number of pixels corresponding to a coordinate unit in the target monitoring region, the heat map data corresponding to the target overlapping region can be determined.

Taking the above embodiment as an example, the heat map matrix can be divided vertically and horizontally using 260/w pixels and 260/h pixels as unit lengths, and based on the second coordinate information of the target overlapping region, blocks in the heat map matrix corresponding to the target overlapping region can be determined, and then the heat map data corresponding to the target overlapping region can be determined.

For example, in a case where multiple target monitoring regions exist, the heat map data of the custom region can be determined based on heat map data corresponding to each target overlapping region.

In order to enable those skilled in the art to better understand the technical solutions provided in the embodiments of the present application, the technical solutions provided in the embodiments of the present application is described below in conjunction with specific embodiments.

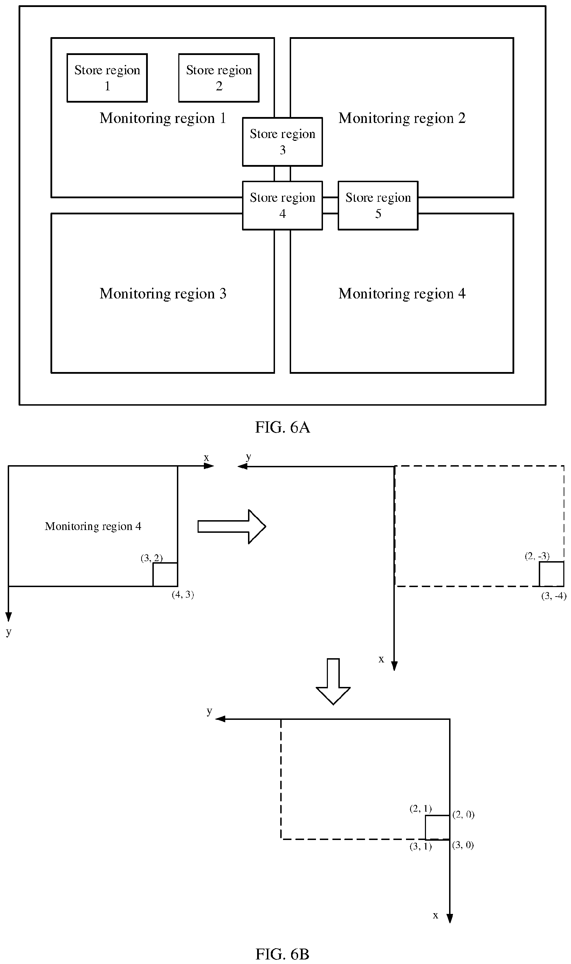

FIG. 6A is a schematic diagram of a plane base map in an application scenario according to some embodiments of the present disclosure. As shown in FIG. 6A, four fisheye cameras are deployed in the application scenario (the monitoring regions of the four fisheye cameras correspond to the monitoring regions 1-4 in the plane base map), and the monitoring regions of these four fisheye cameras cover a total of 5 stores (the corresponding custom regions are the store regions 1-5 in the plane base map).

Based on the application scenario shown in FIG. 6A, the data processing flow provided in the embodiment of the present disclosure is as follows.

a) The key coordinate information in the plane base map coordinate system (with the top left corner of the plane base map as the origin, the x-axis extending to the right in a positive direction, and the y-axis extending downward in a positive direction) is configured in the system. The key coordinate information includes the coordinate information of the monitoring region of the fisheye camera, the rotation angle of the camera region (i.e., the rotation angle of the image coordinate system of the monitoring camera relative to the plane base map coordinate system) and the coordinate information (the first coordinate information mentioned above) of the custom region (i.e. the store region).

For example, the coordinate information of the monitoring region of the fisheye camera and the custom region is represented by the coordinates of the upper left vertex and the lower right vertex.

As an example, the direction of the actual deployed fisheye camera region may deviate from the direction of the plane base map, and it is necessary to adjust the rotation angle of the fisheye camera region relative to the plane base map at the software level.

As an example, the rotation angle can be an integer multiple of 90°.

b) Based on the first coordinates (in the plane base map coordinate system) of the top left vertex and the bottom right vertex of the monitoring region of the fisheye camera, and the first coordinates of the top left vertex and the bottom right vertex of the custom region, it is determined whether there is an overlapping region between the monitoring region and the custom region.

For example, the monitoring region overlapping with the custom region includes a boundary of the monitoring region and a boundary of the custom region intersecting.

For example, assuming that the coordinates of the upper left vertex of a rectangular region (including a monitoring region and a custom region) are (start_x, start_y), and the coordinates of the lower right vertex of a rectangular region (including a monitoring region and a custom region) are (end_x, end_y).

The necessary condition for the overlap between the monitoring region and the custom region is the value of the smaller end_x of the two rectangular regions is greater than or equal to the value of the larger start_x of the two rectangular regions, and the value of the smaller end_y of the coordinates of the two rectangular regions is greater than or equal to the value of the larger start_y of the coordinates of the two rectangular regions.

For example, to determine whether there is an overlapping region between the monitoring region of fisheye camera 4 (i.e., monitoring region 4 in FIG. 6A) and the custom region corresponding to store 4 (i.e., store region 4 in FIG. 6A), assuming that the first coordinates of the top left vertex and the bottom right vertex of monitoring region 4 are respectively f_point1 (start_x1, start_y1) and f_point2 (end_x1, end_y1), and the first coordinates of the top left vertex and the bottom right vertex of store region 4 are respectively s_ point1 (start_x2, start_y2) and s_point2 (end_x2, end_y2), then:

max_start x=max (start_x1, start_x2)
max_start_y=max (start_y1, start_y2)
min_end_x=min (end_x1, end_x2)
min_end_y=min (end_y1, end_y2)

In the case of meeting the following conditions:

min_end_x≥max_start_x, and min_end_y>max_start_y

It is determined that an overlapping region exists between monitoring region 4 and store region 4.

c) The coordinate information (i.e., the first coordinate information mentioned above) of the overlapping region (i.e. the target overlapping region) between the monitoring region and the store region in the plane base map coordinate system is determined.

As an example, taking the overlapping region between monitoring region 4 and store region 4 as an example, the first coordinates of the top left vertex and the bottom right vertex of the target overlapping region are:

o_point1 (max_start_x, max_start_y) and o_point2 (min_end_x, min_end_y)

d) The coordinate information (i.e., the third coordinate information mentioned above) of the target overlapping region in the monitoring region coordinate system is determined.

As an example, taking the overlapping region between monitoring region 4 and store region 4 as an example, since the origin of the monitoring region coordinate system corresponding to monitoring region 4 is the upper left vertex of monitoring region 4, its coordinate is f_point1 (start_x1, start_y1), and the horizontal and vertical axes are respectively in the same direction as the horizontal and vertical axes of the plane base map coordinate system. Therefore, by translating, the third coordinate information of the target overlapping region in the monitoring region coordinate system corresponding to monitoring region 4 can be obtained. The third coordinates (coordinates in the monitoring region coordinate system) of the upper left vertex and the lower right vertex of the target overlapping region are:

oo_point1 (max_start_x-start_x1, max_start_y-start_y1)
oo_point2 (min_end_x- start_x1, min_end_y-start_y1)

e) Based on the rotation angle of the camera region, the coordinate information (i.e., the second coordinate information mentioned above) of the target overlapping region in the monitoring region coordinate system after rotation adjustment is determined.

As an example, considering the inconsistency between the actual deployment direction of the monitoring region of the fisheye camera and the direction of the monitoring region coordinate system of the fisheye camera assumed in d), it is necessary to rotate an angle (the rotation angle of the monitoring region) to adjust to the correct direction. For example, the image coordinate system of the target monitoring camera can be obtained by rotating the target monitoring region coordinate system based on the rotation angle.

Without rotating the monitoring region of the fisheye camera, the element of (0, 0) of the heat map matrix data is distributed at the upper left vertex of the monitoring region of the fisheye camera, the other elements of heat map matrix data are distributed in the direction of the coordinate system, and the element of (259, 259) is distributed at the lower right vertex of the monitoring region of the fisheye camera.

Assuming that the rotation angle of the monitoring region of the fisheye camera is 90° (i.e., 90° clockwise), the element of (0,0) is actually distributed at the top right vertex of the monitoring region of the fisheye camera after rotation, and the element of (259, 259) is distributed at the bottom left vertex of the monitoring region of the fisheye camera.

Rotating the monitoring region of the fisheye camera is equivalent to rotating the monitoring region coordinate system with the same angle (rotating with the origin of the monitoring region coordinate system as the center of rotation, and then translating the origin), that is, the coordinate points in the monitoring region coordinate system are mapped through the axis rotation formula, and the mapped coordinates are translated with the translation of the origin to obtain the coordinates in the rotated coordinate system. The principle and implementation are as follows.

Assuming the rotation angle of the coordinate system is θ, coordinates are (x, y) in the original coordinate system xOy, and coordinates are (x', y') in the new coordinate system x'Oy', the axis rotation formula can be as follows:

$$x' = x * \cos\theta + y * \sin\theta$$

$$y' = y * \cos\theta - x * \sin\theta$$

After coordinate conversion using the above axis rotation formula, based on the translation relationship between the origin of the rotated coordinate system and the origin of the coordinate system before rotation, the coordinates converted through the axis rotation formula can be translated, to obtain the second coordinate information of the target overlapping region.

For example, as shown in FIG. 6B, assuming that in the overlapping region between monitoring region 4 and store region 4, the third coordinates of the closest vertex (top left vertex) and farthest vertex (bottom right vertex) to the origin of the monitoring region 4 coordinate system are respectively (3, 2) and (4, 3), and the rotation angle of monitoring region 4 is 90°, the coordinates obtained after axis rotation mapping are (2, -3) and (3, -4).

Since the origin after rotation is the top right vertex of monitoring region 4, and the origin before rotation is the top left vertex of monitoring region 4, that is, the origin is horizontally shifted to the right by the width of the monitoring region (in this embodiment, the width is 4), and the horizontal direction of the rotated coordinate system is the y-axis. Therefore, for the coordinates of the overlapping region, it is necessary to add 4 to the y coordinate value on the basis of the coordinates obtained by the axis rotation mapping, that is, the final coordinates are (2, 1) and (3, 0).

In addition, since the monitoring region coordinate system of monitoring region 4 is rotated by 90°, the vertex closest to the origin in the target overlapping region has changed from the top left vertex of the target overlapping region to the top right vertex of the target overlapping region, and the farthest vertex has changed from the bottom right vertex to the bottom left vertex of the target overlapping region.

Correspondingly, the second coordinates of the target overlapping region can be respectively (2, 0) (coordinates of the upper right vertex) and (3, 1) (coordinates of the lower left vertex).

f) According to a width ratio of the monitoring region of the fisheye camera to a heat map and a height ratio of the monitoring region of the fisheye camera to the heat map, the heat map data corresponding to the target overlapping region is extracted from the heat map matrix.

For example, when obtaining the heat map data corresponding to the target overlapping region, the obtained heat map data can be analyzed, such as determining the maximum heat value, average heat value, etc.

g) In the case where multiple monitoring regions overlap with the store region, the heat map data corresponding to each target overlapping region can be determined.

As an example, the heat map data corresponding to each target overlapping region can be analyzed; or the heat map data corresponding to the store region can be determined based on the heat map data corresponding to each target overlapping region, and then the heat map data corresponding to the store region can be analyzed, such as determining the maximum heat value and average heat value, etc.

The above describes the method provided in the present disclosure. The following is a description of apparatuses provided in the present disclosure.

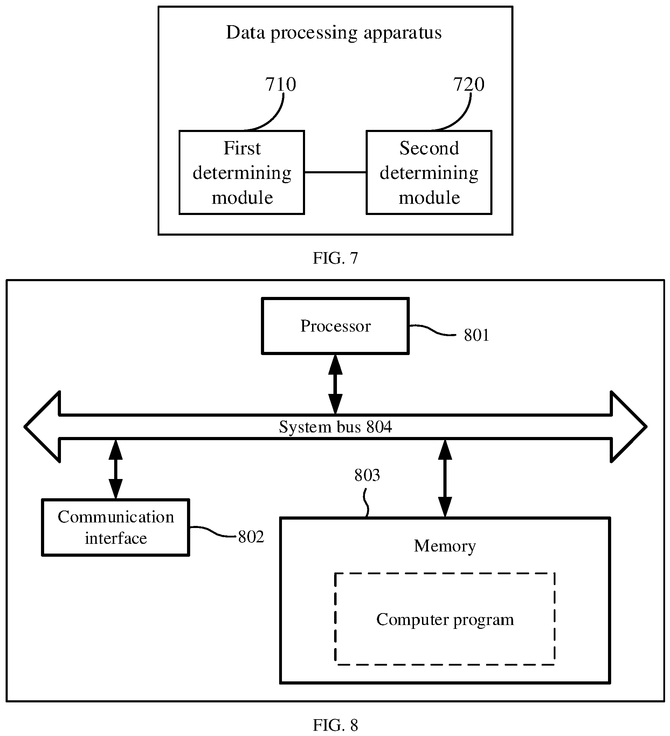

FIG. 7 is a structural schematic diagram of a data processing apparatus according to some embodiments of the present disclosure. As shown in FIG. 7, the data processing apparatus can include:

a first determining unit 710, configured to determine at least one target overlapping region, where any one of the at least one target overlapping region is an overlapping region between a custom region and one of at least one target monitoring region, and one of the at least one target monitoring region is a monitoring region that overlaps with the custom region; and

a second determining unit 720, configured to, according to heat map data for the at least one target monitoring region and the at least one target overlapping region, determine heat map data for the custom region.

As a possible embodiment, when determining the at least one target overlapping region, the first determining unit 710 is further configured to:

according to first coordinate information of a monitoring region of each of at least one monitoring camera in a plane base map coordinate system and first coordinate information of the custom region in the plane base map coordinate system, determine at least one monitoring region each of which overlaps with the custom region as the at least one target monitoring region; and

according to the first coordinate information of the custom region and the first coordinate information of the at least one target monitoring region, determine first coordinate information of the at least one target overlapping region in the plane base map coordinate system, where the first coordinate information of the at least one target overlapping region is configured to represent the at least one target overlapping region; and

when according to the heat map data for the at least one target monitoring region and the at least one target overlapping region, determining the heat map data for the custom region, the second unit 720 is further configured to:

for each of the at least one target monitoring region and a target overlapping region between the target monitoring region and the custom region, according to first coordinate information of the target overlapping region and first coordinate information of the target monitoring region, determine second coordinate information of the target overlapping region in an image coordinate system of a target monitoring camera corresponding to the target monitoring region; and

according to the heat map data for the at least one target monitoring region and the second coordinate information of the at least one target overlapping region, determine the heat map data for the custom region.

As a possible embodiment, when according to the heat map data for the at least one target monitoring region and the second coordinate information of the at least one target overlapping region, determining the heat map data for the custom region, the second unit 720 is further configured to: according to a width ratio of each of the at least one target monitoring region to a heat map and a height ratio of each of the at least one target monitoring region to the heat map, and the second coordinate information of the at least one target overlapping region, heat map data for the at least one target overlapping region can be determined, and according to the heat map data for the at least one target overlapping region, the heat map data for the custom region can be determined.

As a possible embodiment, when according to first coordinate information of a monitoring region of each of at least one monitoring camera in a plane base map coordinate system and first coordinate information of the custom region in the plane base map coordinate system, respectively determining at least one monitoring region that overlaps replace custom region as the at least one target monitoring region, the first determining unit 710 is further configured to:

> determine first coordinate information of a first vertex and a second vertex of a monitoring region of each of the at least one monitoring camera in the plane base map coordinate system, and first coordinate information of a first vertex and a second vertex of the custom region, where for a monitoring region of each of the at least one monitoring camera, the first vertex and the second vertex of the monitoring region are respectively a vertex closest to and a vertex farthest from an origin of the plane base map coordinate system in the monitoring region, and the first vertex and the second vertex of the custom region are respectively a vertex closest to and a vertex farthest from the origin of the plane base map coordinate system in the custom region; and
> according to first coordinate information of a first vertex and a second vertex of a monitoring region of each of at least one monitoring camera in the plane base map coordinate system and the first coordinate information of the first vertex and the first coordinate information of the second vertex of the custom region in the plane base map coordinate system, determine the at least one monitoring region each of which overlaps with the custom region as the at least one target monitoring region.

As a possible embodiment, when according to first coordinate information of a first vertex and a second vertex of a monitoring region of each of at least one monitoring camera in the plane base map coordinate system and the first coordinate information of the first vertex and the second vertex of the custom region in the plane base map coordinate system, determining the at least one monitoring region each of which overlaps with the custom region as the at least one target monitoring region, the first determining unit 710 is further configured to:
for any monitoring region, in response to determining that an abscissa of a target second vertex is greater than or equal to an abscissa of a target first vertex, and an ordinate of the target second vertex is greater than or equal to an ordinate of the target first vertex, determine that the monitoring region is a target monitoring region that overlaps with the custom region, where the target first vertex is one of the first vertex of the monitoring region and the first vertex of the custom region that is farthest from the origin of the plane base map coordinate system, and the target second vertex is one of the second vertex of the monitoring region and the second vertex of the custom region that is closest to the origin of the plane base map coordinate system.

As a possible embodiment, for each of the at least one target monitoring region and a target overlapping region between the target monitoring region and the custom region, when according to first coordinate information of the target overlapping region and first coordinate information of the target monitoring region, determining second coordinate information of the target overlapping region in an image coordinate system of a target monitoring camera corresponding to the target monitoring region, the second determining unit 720 is further configured to:

> according to the first coordinate information of the target overlapping region and the first coordinate information of the target monitoring region, determine a third coordinate information of the target overlapping region in a target monitoring region coordinate system, where the target monitoring region coordinate system is a coordinate system with a target vertex of the target monitoring region as an origin and a horizontal axis and a vertical axis respectively parallel to and in the same direction as a horizontal axis and a vertical axis of the plane base map coordinate system, and the target vertex is a vertex in the target monitoring region that is closest to the origin of the plane base map coordinate system; and
> according to the third coordinate information of the target overlapping region and a rotation angle of the target monitoring camera, determine the second coordinate information of the target overlapping region.

As a possible embodiment, when according to the heat map data for the at least one target monitoring region and the at least one target overlapping region, determining the heat map data for the custom region, the second unit 720 is further configured to:

> according to a width ratio of each of the at least one target monitoring region to a heat map and a height ratio of each of the at least one target monitoring region to the heat map, and the at least one target overlapping region, determine heat map data for the at least one target overlapping region; and
> according to the heat map data for the at least one target overlapping region, determine the heat map data for the custom region.

In the embodiments of the present disclosure, an electronic device is provided, including a processor and a memory, where the memory stores machine-executable instructions that can be executed by the processor, and the processor is configured to execute machine-executable instructions to implement the data processing method described above.

Referring to FIG. 8, FIG. 8 is a schematic diagram of a hardware structure of an electronic device according to some embodiments of the present disclosure. The electronic device may include a processor 801 and a memory 803 storing machine-executable instructions. The processor 801 and the memory 803 can communicate through a system bus 802. Further, by reading and executing the machine executable instructions stored in the memory 803 and corresponding to a data processing logic, the processor 801 is caused to perform the data processing method described above.

The memory 803 mentioned in the present disclosure can be any electronic, magnetic, optical, or other physical storage device that can contain or store information such as executable instructions, data, and so on. For example, the machine-readable storage medium may be a Radom Access Memory (RAM), a volatile memory, a non-volatile memory, a flash memory, a storage drive (e.g., hard disk drive), a solid state harddisk, any type of storage disk (e.g., compact disk, Digital Video Disk (DVD)), or a similar storage medium, or a combination thereof.

In some embodiments, a machine-readable storage medium, such as memory 803 in FIG. 8, is further provided. The machine-readable storage medium stores machine-executable instructions, which implement the data processing method described above when executed by the processor. For example, the machine-readable storage medium can be ROM, RAM, CD-ROM, magnetic tape, floppy disk, optical data storage device, etc.

In the embodiments of the present disclosure a computer program is further provided, including machine-executable instructions that, where when the processor 801 executes the machine executable instructions, the processor implements the data processing method described above.

It is to be noted that the relational terms such as "first" and "second" used herein are merely intended to distinguish one entity or operation from another entity or operation rather than to require or imply any such actual relation or order existing between these entities or operations. Further, the term "including", "containing" or any variation thereof is intended to encompass non-exclusive inclusion, so that a process, method, article or device including a series of elements includes not only those elements, but also other elements not listed explicitly or those elements inherent to such a process, method, article or device. Without further limitation, the element defined by the statement "including a ......" do not preclude the existence of additional identical elements in the process, method, article, or device that include the element.

The foregoing are only some preferred embodiments of the present disclosure and are not intended to limit the present disclosure, and any modifications, equivalent substitutions, improvements, etc., made within the spirit and principles of the present disclosure shall be included within the scope of protection of the present disclosure.

**Claims**

1. A data processing method, comprising:

   determining at least one target overlapping region, wherein any one of the at least one target overlapping region is an overlapping region between a custom region and one of at least one target monitoring region, and one of the at least one target monitoring region is a monitoring region that overlaps with the custom region; and according to heat map data for the at least one target monitoring region and the at least one target overlapping region, determining heat map data for the custom region.

2. The method according to claim 1, wherein determining the at least one target overlapping region comprises:

   according to first coordinate information of a monitoring region of each of at least one monitoring camera in a plane base map coordinate system and first coordinate information of the custom region in the plane base map coordinate system, determining at least one monitoring region each of which overlaps with the custom region as the at least one target monitoring region; and according to the first coordinate information of the custom region and the first coordinate information of the at least one target monitoring region, determining first coordinate information of the at least one target overlapping region in the plane base map coordinate system, wherein the first coordinate information of the at least one target overlapping region is configured to represent the at least one target overlapping region; and according to the heat map data for the at least one target monitoring region and the at least one target overlapping region, determining the heat map data for the custom region comprises:

   for each of the at least one target monitoring region and a target overlapping region between the target monitoring region and the custom region, according to first coordinate information of the target overlapping region and first coordinate information of the target monitoring region, determining second coordinate information of the target overlapping region in an image coordinate system of a target monitoring camera corresponding to the target monitoring region; and according to the heat map data for the at least one target monitoring region and the second coordinate information of the at least one target overlapping region, determining the heat map data for the custom region.

3. The method according to claim 2, wherein according to the heat map data for the at least one target monitoring region and the second coordinate information of the at least one target overlapping region, determining the heat map data for the custom region comprises:

according to a width ratio of each of the at least one target monitoring region to a heat map and a height ratio of each of the at least one target monitoring region to a heat map, and the second coordinate information of the at least one target overlapping region, determining heat map data for the at least one target overlapping region; and

according to the heat map data for the at least one target overlapping region, determining the heat map data for the custom region.

4. The method according to claim 2, wherein according to the first coordinate information of a monitoring region of each of at least one monitoring camera in the plane base map coordinate system and the first coordinate information of the custom region in the plane base map coordinate system, determining the at least one monitoring region each of which overlaps with the custom region as the at least one target monitoring region comprises:

determining first coordinate information of a first vertex and a second vertex of a monitoring region of each of the at least one monitoring camera in the plane base map coordinate system, and first coordinate information of a first vertex and a second vertex of the custom region, wherein for a monitoring region of each of the at least one monitoring camera, the first vertex and the second vertex of the monitoring region are respectively a vertex closest to and a vertex farthest from an origin of the plane base map coordinate system in the monitoring region, and the first vertex and the second vertex of the custom region are respectively a vertex closest to and a vertex farthest from the origin of the plane base map coordinate system in the custom region; and

according to first coordinate information of the first vertex and the second vertex of the monitoring region of each of at least one monitoring camera in the plane base map coordinate system and the first coordinate information of the first vertex and the second vertex of the custom region in the plane base map coordinate system, determining the at least one monitoring region each of which overlaps with the custom region as the at least one target monitoring region.

5. The method according to claim 4, wherein according to first coordinate information of the first vertex and the second vertex of the monitoring region of each of at least one monitoring camera in the plane base map coordinate system and the first coordinate information of the first vertex and the second vertex of the custom region in the plane base map coordinate system, determining the at least one monitoring region each of which overlaps with the custom region as the at least one target monitoring region comprises:

for any monitoring region, in response to determining that an abscissa of a target second vertex is greater than or equal to an abscissa of a target first vertex, and an ordinate of the target second vertex is greater than or equal to an ordinate of the target first vertex, determining that the monitoring region is a target monitoring region that overlaps with the custom region, wherein the target first vertex is one of the first vertex of the monitoring region and the first vertex of the custom region that is farthest from the origin of the plane base map coordinate system, and the target second vertex is one of the second vertex of the monitoring region and the second vertex of the custom region that is closest to the origin of the plane base map coordinate system.

6. The method according to any one of claims 2-5, wherein for each of the at least one target monitoring region and the target overlapping region between the target monitoring region and the custom region, according to the first coordinate information of the target overlapping region and the first coordinate information of the target monitoring region, determining the second coordinate information of the target overlapping region in the image coordinate system of the target monitoring camera corresponding to the target monitoring region comprises:

for each of the at least one target monitoring region and the target overlapping region between the target monitoring region and the custom region, according to the first coordinate information of the target overlapping region and the first coordinate information of the target monitoring region, determining a third coordinate information of the target overlapping region in a target monitoring region coordinate system, wherein the target monitoring region coordinate system is a coordinate system with a target vertex of the target monitoring region as an origin and a horizontal axis and a vertical axis respectively parallel to and in the same direction as a horizontal axis and a vertical axis of the plane base map coordinate system, and the target vertex is a vertex in the target monitoring region that is closest to the origin of the plane base map coordinate system; and

according to the third coordinate information of the target overlapping region and a rotation angle of the target monitoring camera, determining the second coordinate information of the target overlapping region.

7. The method according to claim 1, wherein according to the heat map data for the at least one target monitoring region and the at least one target overlapping region, determining the heat map data for the custom region comprises:

according to a width ratio of each of the at least one target monitoring region to a heat map and a height ratio of each of the at least one target monitoring region to the heat map, and the at least one target overlapping region, determining heat map data for the at least one target overlapping region; and

according to the heat map data for the at least one target overlapping region, determining the heat map data for the custom region.

8. A data processing apparatus, comprising:

a first determining unit, configured to determine at least one target overlapping region, wherein any one of the at least one target overlapping region is an overlapping region between a custom region and one of at least one target monitoring region, and one of the at least one target monitoring region is a monitoring region that overlaps with the custom region; and

a second determining unit, configured to, according to heat map data for the at least one target monitoring region and the at least one target overlapping region, determine heat map data for the custom region.

9. The apparatus according to claim 8, wherein

when determining the at least one target overlapping region, the first determining unit is further configured to:

according to first coordinate information of a monitoring region of each of at least one monitoring camera in a plane base map coordinate system and first coordinate information of the custom region in the plane base map coordinate system, determine at least one monitoring region each of which overlaps with the custom region as the at least one target monitoring region; and

according to the first coordinate information of the custom region and the first coordinate information of the at least one target monitoring region, determine first coordinate information of the at least one target overlapping region in the plane base map coordinate system, wherein the first coordinate information of the at least one target overlapping region is configured to represent the at least one target overlapping region; and

when according to the heat map data for the at least one target monitoring region and the at least one target overlapping region, determining the heat map data for the custom region, the second unit is further configured to:

for each of the at least one target monitoring region and a target overlapping region between the target monitoring region and the custom region, according to first coordinate information of the target overlapping region and first coordinate information of the target monitoring region, determine second coordinate information of the target overlapping region in an image coordinate system of a target monitoring camera corresponding to the target monitoring region; and

according to the heat map data for the at least one target monitoring region and the second coordinate information of the at least one target overlapping region, determine the heat map data for the custom region.

10. The apparatus according to claim 9, wherein when according to the heat map data for the at least one target monitoring region and the second coordinate information of the at least one target overlapping region, determining the heat map data for the custom region, the second determining unit is further configured to:

according to a width ratio of each of the at least one target monitoring region to a heat map and a height ratio of each of the at least one target monitoring region to a heat map, and the second coordinate information of the at least one target overlapping region, determine heat map data for the at least one target overlapping region; and

according to the heat map data for the at least one target overlapping region, determine the heat map data for the custom region.

11. The apparatus according to claim 9, wherein when according to the first coordinate information of a monitoring region of each of at least one monitoring camera in the plane base map coordinate system and the first coordinate information of the custom region in the plane base map coordinate system, determining the at least one monitoring region each of which overlaps with the custom region as the at least one target monitoring region, the first determining unit is further configured to:

determine first coordinate information of a first vertex and a second vertex of a monitoring region of each of the at least one monitoring camera in the plane base map coordinate system, and first coordinate information of a first vertex and a second vertex of the custom region, wherein for a monitoring region of each of the at least one monitoring camera, the first vertex and the second vertex of the monitoring region are respectively a vertex closest to and a vertex farthest from an origin of the plane base map coordinate system in the monitoring region, and the first vertex and the second vertex of the custom region are respectively a vertex closest to and a vertex farthest from the origin of the plane base map coordinate system in the custom region; and

according to first coordinate information of the first vertex and the second vertex of a monitoring region of each of at least one monitoring camera in the plane base map coordinate system and the first coordinate information of the first vertex and the second vertex of the custom region in the plane base map coordinate system, determine the at least one monitoring region each of which overlaps with the custom region as the at least one target monitoring region.

12. The apparatus according to claim 11, wherein when according to first coordinate information of the first vertex and the second vertex of the monitoring region of each of at least one monitoring camera in the plane base map coordinate system and the first coordinate information of the first vertex and the second vertex of the custom region in the plane base map coordinate system, determining the at least one monitoring region each of which overlaps with the custom region as the at least one target monitoring region, the first determining unit is further configured to:

for any monitoring region, in response to determining that an abscissa of a target second vertex is greater than or equal to an abscissa of a target first vertex, and an ordinate of the target second vertex is greater than or equal to an ordinate of the target first vertex, determine that the monitoring region is a target monitoring region that overlaps with the custom region, wherein the target first vertex is one of the first vertex of the monitoring region and the first vertex of the custom region that is farthest from the origin of the plane base map coordinate system, and the target second vertex is one of the second vertex of the monitoring region and the second vertex of the custom region that is closest to the origin of the plane base map coordinate system.

13. The apparatus according to any one of claims 9-12, wherein for each of the at least one target monitoring region and the target overlapping region between the target monitoring region and the custom region, when according to the first coordinate information of the target overlapping region and the first coordinate information of the target monitoring region, determining the second coordinate information of the target overlapping region in the image coordinate system of the target monitoring camera corresponding to the target monitoring region, the second determining unit is further configured to:

according to the first coordinate information of the target overlapping region and the first coordinate information of the target monitoring region, determine a third coordinate information of the target overlapping region in a target monitoring region coordinate system, wherein the target monitoring region coordinate system is a coordinate system with a target vertex of the target monitoring region as an origin and a horizontal axis and a vertical axis respectively parallel to and in the same direction as a horizontal axis and a vertical axis of the plane base map coordinate system, and the target vertex is a vertex in the target monitoring region that is closest to the origin of the plane base map coordinate system; and

according to the third coordinate information of the target overlapping region and a rotation angle of the target monitoring camera, determine the second coordinate information of the target overlapping region.

14. The apparatus according to claim 8, wherein when according to the heat map data for the at least one target monitoring region and the at least one target overlapping region, determining the heat map data for the custom region, the second determining unit is further configured to:

according to a width ratio of each of the at least one target monitoring region to a heat map and a height ratio of each of the at least one target monitoring region to the heat map, and the at least one target overlapping region, determining heat map data for the at least one target overlapping region; and

according to the heat map data for the at least one target overlapping region, determine the heat map data for the custom region.

15. An electronic device, comprising a processor and a memory, wherein the memory stores machine executable instructions that can be executed by the processor, and the processor is configured to execute the machine executable instructions to implement the method according to any one of claims 1-7.

16. A computer-readable storage medium, wherein a computer program is stored within the computer-readable storage medium, and the computer program when executed by a processor achieves the method according to any one of claims 1 to 7.

17. A computer program, comprising machine executable instructions, wherein when a processor executes the machine executable instructions, the processor implement the method according to any one of claims 1-7.

A                                    B

Fisheye camera

D                                    C

Plane base map

FIG. 1A

Fisheye camera 1              Fisheye camera 2

Fisheye camera 3              Fisheye camera 4

Plane base map

FIG. 1B

Determine at least one target overlapping region ⌐S200

According to heat map data for the at least one target monitoring region and the at least one target overlapping region, determine heat map data for the custom region ⌐S210

FIG. 2

| Custom region 1 | Custom region 2 | Fisheye camera 2 |
| --- | --- | --- |

Fisheye camera 1

Custom region 3

Custom region 4

Custom region 5

Fisheye camera 3

Fisheye camera 4

FIG. 3

Determine first coordinate information of a first vertex and a second vertex of a monitoring region of each monitoring camera in the plane base map coordinate system and the first coordinate information of the first vertex and the second vertex of the custom region in the plane base map coordinate system — S400

According to first coordinate information of the first vertex and the second vertex of the monitoring region of each of at least one monitoring camera in the plane base map coordinate system and the first coordinate information of the first vertex and the second vertex of the custom region in the plane base map coordinate system, respectively determine the at least one monitoring region that overlaps with the custom region as the at least one target monitoring region — S410

FIG. 4

According to the first coordinate information of the target overlapping region and the first coordinate information of the target monitoring region, determine third coordinate information of the target overlapping region in the target monitoring region coordinate system — S500

According to the third coordinate information of the target overlapping region and a rotation angle of the target monitoring camera, determine the second coordinate information of the target overlapping region — S510

FIG. 5

FIG. 6A

FIG. 6B

Data processing apparatus

710                                    720

| First determining module | | Second determining module |

FIG. 7

Processor          801

System bus 804

Communication interface          802

803

Memory

Computer program

FIG. 8

## INTERNATIONAL SEARCH REPORT

| International application No. |
|---|
| **PCT/CN2021/129536** |

| A. | CLASSIFICATION OF SUBJECT MATTER |
|---|---|

G06T 3/00(2006.01)i

According to International Patent Classification (IPC) or to both national classification and IPC

| B. | FIELDS SEARCHED |
|---|---|

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNABS; CNTXT; WPABSC; VEN; USTXTC; WOTXT; EPTXT; CNKI: 热度图, 热力图, 监控, 坐标, 多, 相机, heat map, thermodynamic chart, monitor, supervisory, coordinate, multi, camera

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 112488913 A (HANGZHOU HIKVISION DIGITAL TECHNOLOGY CO., LTD.) 12 March 2021 (2021-03-12) description paragraphs 35-168 | 1-17 |
| PX | CN 112102307 A (HANGZHOU HIKVISION DIGITAL TECHNOLOGY CO., LTD.) 18 December 2020 (2020-12-18) description, paragraphs 69-179 | 1-3, 7-10, 14-17 |
| PX | CN 112822442 A (HANGZHOU HIKVISION DIGITAL TECHNOLOGY CO., LTD.) 18 May 2021 (2021-05-18) description paragraphs 76-194 | 1-3, 7-10, 14-17 |
| X | CN 111914819 A (HANGZHOU WEIMING XINKE TECHNOLOGY CO., LTD. et al.) 10 November 2020 (2020-11-10) description paragraphs 25-49, 60-67 | 1-3, 7-10, 14-17 |
| X | CN 111264056 A (SIEMENS HEALTHCARE DIAGNOSTICS INC) 09 June 2020 (2020-06-09) description paragraphs 18-66 | 1-3, 7-10, 14-17 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 January 2022** | **26 January 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/129536** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 107315824 A (BAIDU ONLINE NETWORK TECHNOLOGY (BEIJING) CO., LTD.) 03 November 2017 (2017-11-03)<br>       entire document | 1-17 |
| A | CN 111274340 A (CHINA UNITED NETWORK COMMUNICATIONS CORPORATION LIMITED et al.) 12 June 2020 (2020-06-12)<br>       entire document | 1-17 |
| A | US 2013091432 A1 (SIEMENS CORP et al.) 11 April 2013 (2013-04-11)<br>       entire document | 1-17 |

Form PCT/ISA/210 (second sheet) (January 2015)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 112488913 | A | 12 March 2021 | None | | | |
| CN | 112102307 | A | 18 December 2020 | None | | | |
| CN | 112822442 | A | 18 May 2021 | None | | | |
| CN | 111914819 | A | 10 November 2020 | CN | 111914819 | B | 26 January 2021 |
| CN | 111264056 | A | 09 June 2020 | US | 2020169699 | A1 | 28 May 2020 |
| | | | | US | 10887555 | B2 | 05 January 2021 |
| | | | | WO | 2019040283 | A1 | 28 February 2019 |
| | | | | EP | 3673650 | A1 | 01 July 2020 |
| CN | 107315824 | A | 03 November 2017 | CN | 107315824 | B | 22 January 2021 |
| CN | 111274340 | A | 12 June 2020 | None | | | |
| US | 2013091432 | A1 | 11 April 2013 | US | 9269243 | B2 | 23 February 2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011365066